# EUROPEAN PATENT SPECIFICATION

(11) **EP 4 232 964 B1**
(45) Date of publication and mention of the grant of the patent: **09.09.2026**
(21) Application number: 21887953.4
(22) Date of filing: 03.11.2021
(51) Int. Cl.: G06N 3/063, G06N 3/09, G06F 7/483, G06F 7/544, G06N 3/0495, G06N 3/0464

(54) **MULTI-DIMENSIONAL LOGARITHMIC NUMBER SYSTEM PROCESSOR FOR INNER PRODUCT COMPUTATIONS**
MEHRDIMENSIONALER LOGARITHMISCHER ZAHLENSYSTEMPROZESSOR FÜR BERECHNUNGEN INNERER PRODUKTE
PROCESSEUR À SYSTÈME DE NUMÉRATION LOGARITHMIQUE MULTIDIMENSIONNEL POUR CALCULS DE PRODUIT INTERNE

(30) Priority: 03.11.2020 US 202063109136 P
(43) Date of publication of application: 30.08.2023
(73) Proprietor: Lemurian Labs Inc., Oakville, Ontario L6H 0G8 (CA)
(72) Inventor: DAWANI, Sanjay, Oakville, Ontario L6H 0G8 (CA); DIMITROV, Vassil, Oakville, Ontario L6H 0G8 (CA); MADANAYAKE, Habarakada L., Miami, Florida 33144 (US)
(74) Representative: Page White Farrer
(86) International application number: PCT/CA2021/051564
(87) International publication number: WO 2022/094710

(56) References cited:
- US-A1- 2019 080 223
- DAISUKE MIYASHITA ET AL: "Convolutional Neural Networks using Logarithmic Data Representation", ARXIV.ORG, CORNELL UNIVERSITY LIBRARY, 201 OLIN LIBRARY CORNELL UNIVERSITY ITHACA, NY 14853, 17 March 2016 (2016-03-17), XP080686928
- ZHANG W ET AL: "A programmable base MDLNS MAC with self-generated look-up table", SYSTEM-ON-CHIP FOR REAL-TIME APPLICATIONS, 2004.PROCEEDINGS. 4TH IEEE INTERNATIONAL WORKSHOP ON BANFF, AB, CANADA 19-21 JULY 2004, PISCATAWAY, NJ, USA,IEEE, 19 July 2004 (2004-07-19), pages 61 - 64, XP010714191, ISBN: 978-0-7695-2182-4, DOI: 10.1109/IWSOC.2004.1319850
- "Multiple-Base Number System - Theory and Applications", 31 January 2017, TAYLOR & FRANCIS, Baton Rouge, ISBN: 9781439830468, article VASSIL DIMITROV, GRAHAM JULLIEN, ROBERTO MUSCEDERE: "Chapters 3, 5 & 8", pages: 69 - 203-224, XP009544863
- DIMITROV V., JULLIEN G.A., MILLER W.C., MUSCEDERE R.: "Efficient Techniques for Binary-to-Multidigit Multidimensional Logarithmic Number System Conversion Using Range-Addressable Look-Up Tables", IEEE TRANSACTIONS ON COMPUTERS, IEEE, USA, vol. 54, no. 3, 1 March 2005 (2005-03-01), USA , pages 257 - 271, XP011125895, ISSN: 0018-9340, DOI: 10.1109/TC.2005.48
- MUSCEDERE ROBERTO: "Improving 2D-Log-Number-System Representations by Use of an Optimal Base", EURASIP JOURNAL ON ADVANCES IN SIGNAL PROCESSING, vol. 2008, no. 1, 1 December 2008 (2008-12-01), pages 1 - 13, XP055939419, DOI: 10.1155/2008/710590

## Description

### TECHNICAL FIELD

The present disclosure relates generally to methods and apparatus for data representation to improve the computational efficiency of artificial intelligence (Al) accelerators.

### REFERENCE TO RELATED APPLICATIONS

This application claims priority from United States Patent Application No. 63/109136 filed on November 3, 2020 entitled "MULTI-DIMENSIONAL LOGARITHMIC NUMBER SYSTEM PROCESSOR FOR INNER PRODUCT COMPUTATIONS".

### BACKGROUND

Deep neural networks, such as convolutional neural networks (CNN), can be used for image and video recognition and classification and other artificial intelligence (Al) applications such as recommender engines, natural language processing and medical image analysis. The neural networks used for these applications have grown in computational complexity, requiring increased power consumption for training and inference. In particular, running neural networks on mobile or embedded platforms is challenging due to their hardware and power constraints. Edge devices (devices that allow local devices or networks, which interface with consumer or commercial products (e.g., robots, drones, surveillance equipment, Augmented Reality (AR) products, Virtual Reality (VR) products, self-driving vehicles, smartphones, wearable devices and the like) to connect to the edge of the Internet have limitations imposed by their size and available power. As such, there is a need for solutions to enable more efficient operation of neural networks on such edge devices. Some of these efforts are directed to hardware design efficiency. Other efforts are directed to increasing the efficiency of machine learning models. However, given the increasing computational complexity of neural networks, improved efficiency in hardware design and modelling alone may not provide sufficient solutions.

As such, there is an increasing interest in the use of methods of data representation to improve the computational efficiency in the operations run by neural networks. For example, where it is practical to accept some loss in precision in exchange for a gain in efficiency, low-precision arithmetic and/or compression can be used. However, some low-precision computational methods yield insignificant improvements in computational efficiency and/or poor or even invalid results in training and inference. There is a need for methods and apparatus of data representation that can be used for improving computational efficiency, including for example the inner product computations used in convolutional neural networks, while still achieving acceptable outputs. Daisuke Miyashita et al, "Convolutional Neural Networks using Logarithmic Data Representation" discloses a data representation that enables networks to be encoded to 3 bits with negligible loss in classification performance. Zhang W et al, "A programmable base MDLNS MAC with self-generated look-up table" discloses an architecture for a programmable second base multi-dimensional Logarithmic Number System (MDLNS) Multiply Accumulator Cell (MAC) using DRAM to store the conversion look-up table.

### SUMMARY OF THE DISCLOSURE

The present invention is defined in the independent claims. Further embodiments are set forth in the dependent claims.

In general, the present specification describes methods and apparatus incorporating the use of data representation based on multi-dimensional logarithmic number systems for hardware acceleration of inner product computations in neural networks such as convolutional neural networks (CNNs).

One aspect of the invention provides a method for implementing training and inference of deep neural networks. The method includes: receiving a set of training data; representing the set of training data in a multidimensional logarithmic number system (MDLNS), the MDLNS representation using a first exponent associated with a first base and a second exponent associated with a second base; conducting deep neural network training on the set of training data, using a predetermined first base and a predetermined second base, to determine a set of neural network weight coefficients; based on the determined set of neural network weight coefficients and for the predetermined first base, optimizing the second base for multi-dimensional logarithmic data representation; and conducting deep neural network inference on a set of network inputs to obtain a set of network outputs, using the optimized multi-dimensional logarithmic data representation.

In some embodiments, optimizing the second base for multi-dimensional logarithmic data representation comprises determining an optimal second base for which the mean square error (MSE) is minimized. A mixed-integer global optimization procedure may be implemented to optimize the second base and the possible range of the second exponents associated therewith.

In some embodiments, the predetermined first base is 2. In some embodiments, the predetermined second base is 2^{ω}, where ω = (1+sqrt(5))/2. The MDLNS may, optionally, use one or more additional exponents (e.g., third exponent, fourth exponent, etc.), each of which is associated with a corresponding one or more additional bases (e.g., third base, fourth base, etc.). In some embodiments, conducting deep neural network training on the set of training data may involve using a predetermined third base, with the predetermined second base as $2 cos \left(\frac{2 π}{y}\right)$ and the predetermined third base as ${\left[2cos\left(\frac{2 π}{y}\right)\right]}^{2}$. In some embodiments, at least one of the one or more additional bases are optimized for the multi-dimensional logarithmic data representation.

In some embodiments, the exponents of the bases are integer values. In some embodiments, the first exponent and the second exponent are opposite in polarity. In some embodiments, the first exponent and the second exponent are fractional values. In some embodiments, the predetermined second base is selected from the group consisting of: $\sqrt{2} , \sqrt[3]{2}$, *and* $\sqrt[4]{2}$*.*

Another aspect of the invention provides hardware accelerators that may be employed on edge devices to perform the methods described herein. The hardware accelerator includes: a multidimensional logarithmic number system (MDLNS) converter connected to a memory of the computing device and a cache of the hardware accelerator; processing units arranged in an array of a first number of rows and a second number of columns to collectively form a processing core; and a microcontroller connected to the processing core and the MDLNS converter. The MDLNS converter may be configured to create an MDLNS representation of a set of data received from the memory of the computing device and to store the MDLNS representation in the cache of the hardware accelerator. The MDLNS representation may use a first exponent associated with a binary base and a second exponent associated with a non-binary base.

In some embodiments, the processing unit of the hardware accelerator comprises a first adder operating in the binary base and a second adder operating in the non-binary base. The processing unit may optionally comprise an aggregate adder connected to the first adder and the second adder, the aggregate adder having aggregation channels that correspond to unique combination of pairs (N,M) defined by the number of bits of the first exponent and the number of bits of the second exponent. The aggregate adder may optionally include 2^{N+M} up-counters operating in parallel for aggregating a unique (N, M) combination of exponents.

In some embodiments, the processing units of the processing core are configured as a systolic array of matrix-vector multiply units. In some embodiments, the second base is 2^{ω}, where ω = (1+sqrt(5))/2. In some embodiments, the hardware accelerator comprises multiple processing tiles that are connected to other processing tiles by way of a network on chip. Each of the processing tiles may include a number of processing cores described above.

Hardware accelerators described herein may be used in computing devices, such as edge computing devices, to conduct deep neural network inference, incorporating the use of logarithmic data representation for increased computational efficiency and reduced power consumption.

Additional aspects of the present invention will be apparent in view of the description which follows.

### BRIEF DESCRIPTION OF THE DRAWINGS

Features and advantages of the embodiments of the present invention will become apparent from the following detailed description, taken with reference to the appended drawings in which:
FIG. 1 illustrates a geometric interpretation for multi-dimensional logarithmic number representation;
FIG. 2 schematically illustrates an exemplary embodiment of an edge computing device that can be used to run deep neural networks with hardware accelerators to increase its computational efficiency;
FIG. 3 is a block diagram of an example embodiment of a hardware accelerator of FIG. 2;
FIG. 3A is a schematic diagram of a processing unit of the FIG. 3 hardware accelerator according to an example embodiment.
FIG. 3B is a schematic diagram of an exemplary aggregate adder which may be included in some embodiments of the FIG. 3A processing unit.
FIG. 4 illustrates a method according to one embodiment incorporating multi-dimensional logarithmic data representation for a deep neural network training and inference implementation.

### DETAILED DESCRIPTION

The description, which follows, and the embodiments described therein, are provided by way of illustration of examples of particular embodiments of the principles of the present invention. These examples are provided for the purposes of explanation, and not limitation, of those principles and of the invention.

Described herein are methods and apparatus incorporating the use of data representation based on multi-dimensional logarithmic number systems for hardware acceleration of inner product computations in neural networks such as convolutional neural networks (CNNs). Applications for these methods and apparatus include neural network training and inference calculations. However, any device that requires low-power, low-area and fast inner product computational units can benefit from the methods and apparatus described herein. Embodiments of the invention can be incorporated into accelerators that can be used for computer vision, artificial intelligence (AI) applications, image compression, voice recognition, machine learning, or other applications in edge devices (e.g., robots, drones, surveillance equipment, Augmented Reality (AR) products, Virtual Reality (VR) products, self-driving vehicles, smartphones, wearable devices and the like).

The classical, one-dimensional logarithmic number system (LNS) has various uses in low-power, low-precision digital signal and image processing applications. It is used in the area of digital filtering (such as finite impulse response (FIR), infinite impulse response (IIR) and adaptive filters) as well as for implementing signal transforms. The mechanical version of the LNS is the well-known slide-rule.

LNS can be summarized as follows: it converts multiplications and divisions into additions and subtractions. Additions and subtractions are implemented through look-up tables (LUT) and extra additions. One critical drawback is the size of the LUTs, which tend to grow exponentially with the dynamic range of the computations. As a result, in general it is practical to use LNS only in applications requiring low-precision (e.g. 8-16 bits dynamic range). The removal of multipliers from the overall inner product architecture typically results in low-power implementation, which is a desirable feature for mobile applications.

Low-precision computation is advantageous to speed up calculations associated with applications such as machine learning (e.g., deep learning, continual learning with or without weights updated during training time and after deployment, reinforcement learning, etc.), artificial intelligence, 3D imaging, AR/VR simulations and the like. Investigations of logarithmic representations as an alternative to standard floating-point representation have yielded promising results for these applications, including a massive reduction of power consumption. By contrast, the use of floating-point representation provides an unnecessarily large dynamic range for the computations in such applications, and therefore leads to much slower calculations, and higher power consumption.

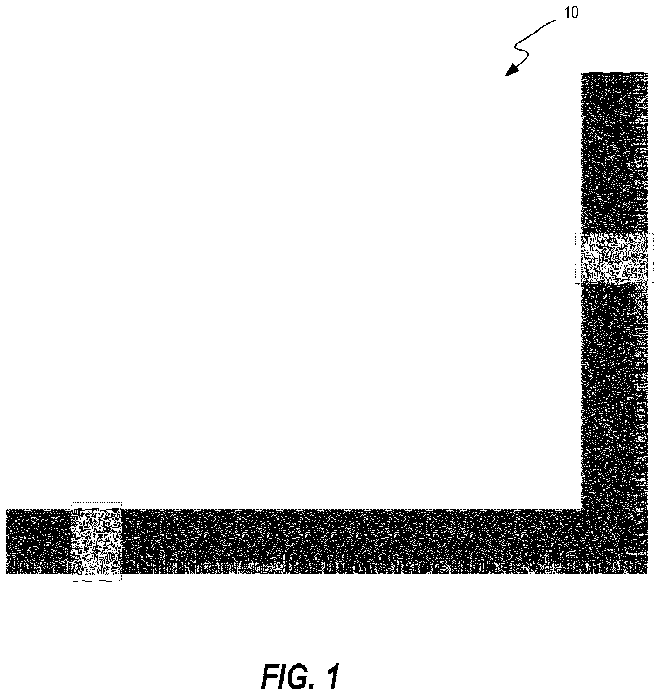

The Multidimensional Logarithmic Number System (MDLNS) can be viewed as a two-dimensional extension of LNS. In MDLNS, a real number, *x,* can be encoded as: *x* = *s* * D1^{a}* D2^{b}, where (D1, D2) is a set of two, multiplicatively independent bases (which could be real or even complex) and (a,b) is a set of two integers, where s = +1, if *x* is positive, and *s* = -1, if *x* is negative. A simple geometric interpretation for this representation is the two-dimensional slide rule 10, as seen in FIG. 1.

Some of the main differences between LNS and MDLNS are outlined in Table 1 below:

**Table 1: Comparison between Classical Logarithmic Number Systems and Multidimensional Logarithmic Number Systems**

| | **LNS** | **MDLNS** |
|---|---|---|
| **Encoding** | *x* = s * D^{y} | *x* = *s* * D1^{a} * D2^{b} |
| | *s* = +-1; *y* - real | *s* = +-1 , (a,b) - integers |
| | D usually is 2 | D1 usually is 2, D2 may be optimized in accordance to the specific application |
| **Multiplication** | x₁*x₂ = s₁*s₂ * D^{y1+y2} equivalent to one addition of real numbers | x₁*x₂ = s₁*s₂ * D1^{a1+a2}*D2^{b1+b2} equivalent to two independent additions of small integers |
| **Addition** | x₁+x₂=x₁ + GaussianLog(x₂-x₁) | x₁+x₂= (a₁,b₁) + 2DGaussianLog(a₂-a₁,b₂-b₁) |
| **GaussianLog** | LUT of size O(2ⁿ) | 2 LUTs of size O(2^{n/2}) |
| **Conversion to binary** | One search operation over O(2ⁿ) LUT | One search operation over O(2^{n/2}) LUT and one addition |

It should be noted that LNS is a partial case of MDLNS, if the second base, D2, is selected as the number one. In applications where LNS provides an attractive practical performance, MDLNS can be adapted to provide the same advantages as LNS.

As seen in Table 1, MDLNS includes features that do not have any analogue in LNS. As such, MDLNS can be exploited by making more efficient use of such features to provide computational advantages over LNS. For example, MDLNS offers exponentially faster conversion from logarithmic to binary format. In LNS, the conversion from logarithmic to binary format is accomplished by either the use of large LUTs or the use of a special circuit that implements the function *f*(*x*)=2*^{x}*. In MDLNS, the conversion can be performed considerably faster if the powers of the second base, D2, are stored in a floating-point manner (e.g., D2*^{exp}* = 1.ddddd * 2*^{eeeee}*) for every possible value of the exponent *exp*.

One difference between MDLNS and classical LNS (or floating-point arithmetic) is the existence of non-trivial approximations of unity (e.g., numbers of the form 2^{*exp*1} * D2^{*exp*2} that are very close to 1). The examples below illustrate how these approximations of unity can be used advantageously to guard against computational overflow.

In one example, the bases of a particular MDLNS are D1 = 2 and D2 = 3. In this example, good approximations of unity include numbers such as: 2⁸ * 3⁻⁵, 2¹⁹ * 3⁻¹², 2⁸⁴ * 3-⁵³, etc. Illustratively, 2*^{a}* * 3*^{b}* (i.e., with *a*²+ *b*² > 0, a and *b* as integers) can be arbitrarily close to one, if no restrictions are imposed on the bit-size of the pair of exponents (*a*, *b*)*,* since 2 and 3 are multiplicatively independent (i.e., the number log₂3 is irrational).

As another example, x*²*, where *x* = (180,-115), is computed by making use of 9-bit fixed-point binary arithmetic. The real value of *x* is approximately 0.207231. If *x*² is computed directly, then the result, (360,-230), will produce an overflow error in the case of 9-bit signed fixed-point arithmetic. However, good approximations of unity provided by MDLNS offers an optimization option that mitigates the overflow problem. Notably, the optimization option does not have an analogue in the one-dimensional logarithmic number system (1DLNS) nor in the floating-point binary arithmetic. If *x* is multiplied by the number encoded in two-dimensional logarithmic number system (2DLNS) as (-84,53) (i.e., a number that is very close to unity), then the error associated with this scaling is very small and the size of the exponents can be reduced to (96,-62). This allows the squaring operation to be safely performed within the 9-bit fixed-point dynamic range, yielding the final answer of (192,-164). Illustratively, reducing the size of the numbers used to a smaller, overflow-free range, can offer enormous computational options.

Standard computational procedures like standard multiplication can also be performed within 2DLNS. As an example, 41 can be multiplied with 109 by making use of 2DLNS with bases D1 = 2, D2 = 2.0228). With this selection of bases, the number 41 is encoded like (-17, 22) and the number 109 is encoded like (21,-14). The addition of the exponents, component-wise, produces the pair (4,8). To obtain the number encoded by the pair, a small LUT containing the powers of D2 (i.e., encoded like: 1.ddddd * 2^{eeeee}) can be used. In the illustrated example, D2⁸ = 1.0001100001.... * 2⁸ is multiplied by 24 to obtain 1.0001100001... * 212 corresponding to 4485 in base 10. The correct product of 41 multiplied by 109 is 4469 in base 10.

Aspects of the invention relate to systems and methods that use MDLNS, such as 2DLNS described above, to provide multi-dimensional logarithmic data representations for performing computations. Illustratively, using multi-dimensional logarithmic representations of data can increase computational efficiency for applications such as image compression, image or voice recognition, machine learning, etc., performed by edge computing devices.

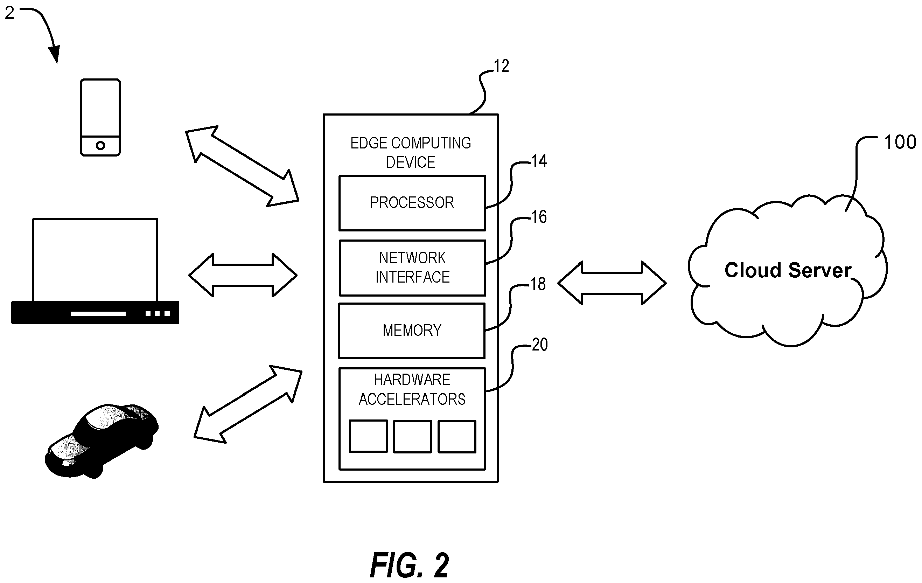

FIG. 2 illustrates a computing device 12 according to an example embodiment. Computing device 12 may be a computing device operating at the edge of the internet. For the purposes of facilitating the description, computing device 12 may be referred to herein as "edge computing device". However, it should be understood that other types of computing devices are interchangeable with the "edge computing device" within the scope of the present invention.

As seen in FIG. 2, edge computing device 12 comprises a processor 14, network interface 16 (supporting, for example, Ethernet and/or Wi-Fi connectivity to the Internet), memory 18, and one or more hardware accelerators 20 that may be adapted to perform application specific computations. Edge computing device 12 may be connected to the internet through the cloud or a cloud server 100. As depicted in FIG. 2, various local devices 2 or local networks of interest, such as commercial robots or drones, military robots or drones, orbiting data centers, satellites, surveillance equipment, Augmented Reality (AR) products, Virtual Reality (VR) products, personal computing devices like smartphones, wearable devices, autonomous (self-driving) vehicles, or any other wireless electronic devices, may be connected to edge computing device 12.

Edge computing device 12 is typically located relatively proximate to local devices 2 to reduce latency associated with data transmission between local devices 2 and edge computing device 12. For example, edge computing device 12 may be installed on top of a wind turbine to receive and process data collected from a local sensor 2 of the wind turbine. As another example, edge computing device 12 may be installed on top of a traffic light to receive and process data transmitted from an autonomous vehicle 2. In some embodiments, edge computing device 12 is physically located at and/or forms a part of local device 2 (i.e., local device 2 may comprise an edge computing device 12).

Edge computing device 12 may, in some cases, be required to run deep neural networks. For example, edge computing device 12 may employ deep neural networks to execute AI applications such as image or video recognition, voice recognition, recommender engines, natural language processing, medical image analysis, etc. In such cases, edge computing device 12 may be configured to assign computational tasks associated with running the neural network to one or more of its hardware accelerators 20. In some embodiments, edge computing device 12 comprises hardware accelerators 20 that are programmable or otherwise custom designed to perform matrix-vector multiplications and/or inner product computations. Although not necessary, hardware accelerator 20 typically incorporates a tiled-based architecture. Illustratively, hardware accelerators 20 may perform such computations in a manner that is more computationally efficient compared to using traditional central processing units (CPUs) or graphical procession units (GPUs).

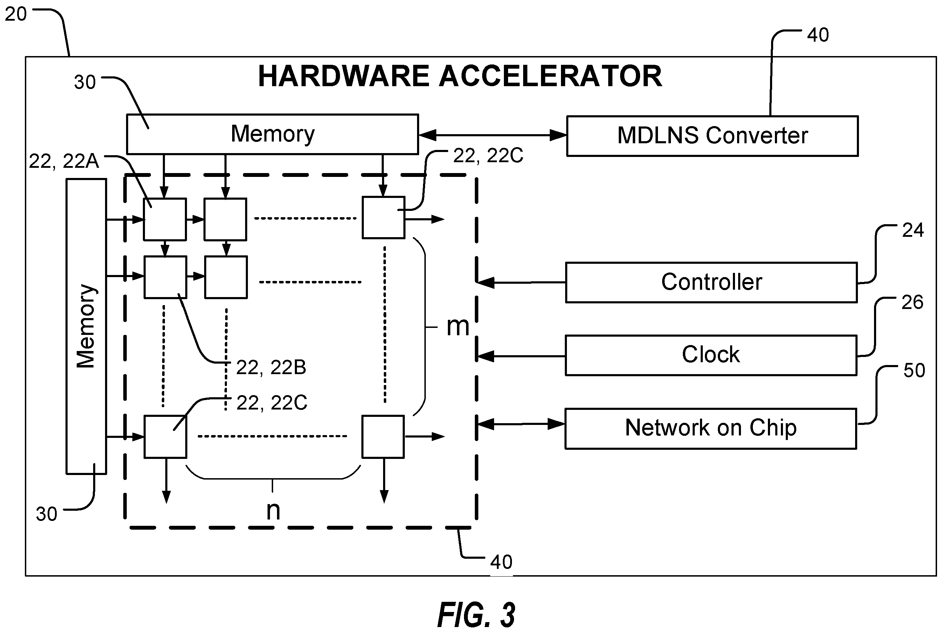

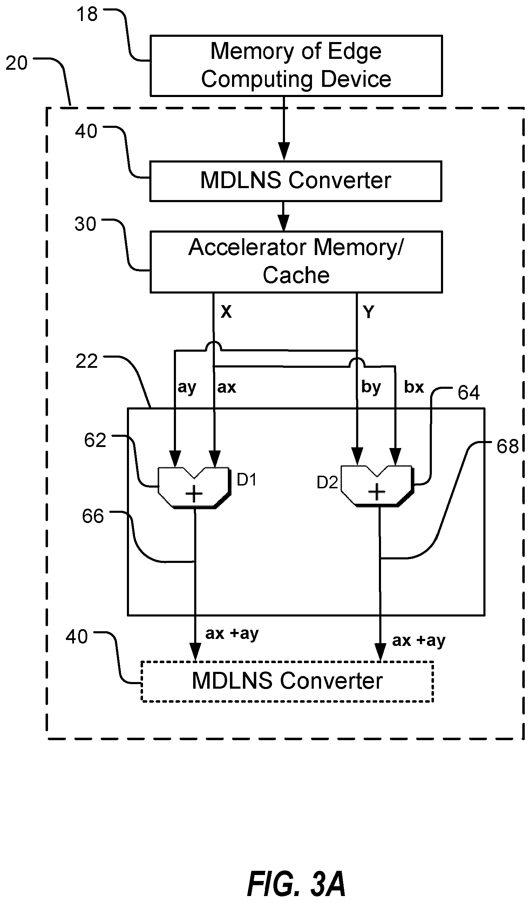

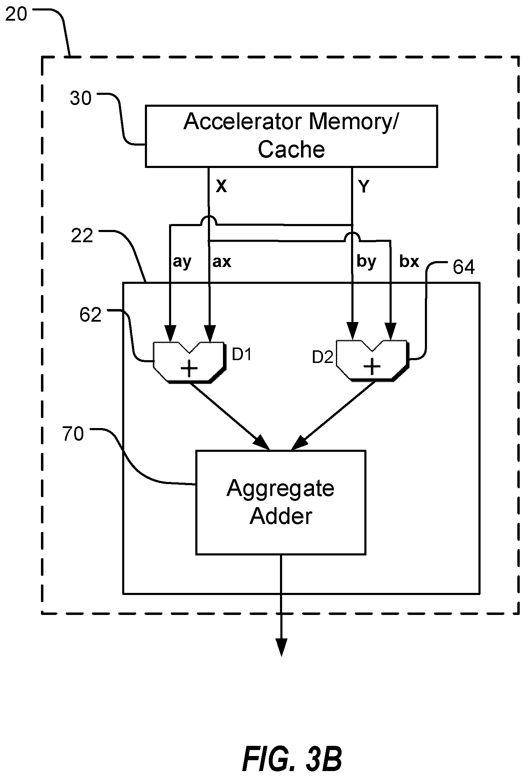

FIG. 3 is a block diagram of an example embodiment of hardware accelerator 20. Hardware accelerator 20 comprises a plurality of processing elements 22 arranged in a parallel architecture. Processing elements 22 may be arranged in an array of any suitable dimension (e.g. 2, 3, etc.). For example, processing elements 22 may be arranged in a two-dimensional array having *m* rows and *n* columns as depicted in FIG. 3. The number of *m* rows can be any suitable number, including, for example, any number in the range of two to sixteen (e.g., 2, 3, 4, 5, 6, 7, 8, 9, 10, 11, 12, 13, 14, 15, or 16). The number of *n* columns can be any suitable number, including, for example, any number in the range of two to sixteen (e.g., 2, 3, 4, 5, 6, 7, 8, 9, 10, 11, 12, 13, 14, 15, or 16). In some embodiments, processing elements 22 are arranged in a two-dimensional array having the same number of *m* rows and *n* columns (i.e., processing elements 22 may be arranged in a square array).

For the purposes of facilitating the description, an assembly of processing elements 22 arranged in an array configuration (e.g., as described above) may be referred to herein as a processing core 40. In the FIG. 3 example embodiment, a single processing core 40 of hardware accelerator is shown for the purposes of illustration and for brevity. Hardware accelerator 20 may generally comprise any suitable number of processing cores 40. Each processing core 40 can have the same or different number of processing elements 22 as the other processing cores 40 of hardware accelerator 20.

For the purposes of facilitating the description, an assembly of processing cores 40 may be referred to herein as a processing tile. Each processing tile comprises a suitable number, including, for example, any number in the range of two to sixteen (e.g., 2, 3, 4, 5, 6, 7, 8, 9, 10, 11, 12, 13, 14, 15, or 16) of processing cores 40. For example, in one example embodiment, a single processing tile of hardware accelerator 20 may comprise eight (8) processing cores 40 and each processing core 40 may comprise sixty-four (64) processing elements 22 arranged in a square array of eight (8) rows and eight (8) columns. Hardware accelerator 20 may comprise any suitable number of processing tiles, depending on the processing power that is required by edge computing device 12. For many applications, edge computing devices 12 comprise hardware accelerators 20 having between sixty four (64) to five hundred and twelve (512) processing tiles.

Processing cores 40 and the processing units 22 contained therein are controlled by one or more microcontrollers 24 of hardware accelerator 20. Microcontroller 24 may be implemented using one or more of: specifically designed hardware, configurable hardware, programmable data processors configured by the provision of software or firmware capable of executing on the data processors, and special purpose data processors that are specifically programmed, configured, or constructed to control processing units 22 in accordance with methods described herein.

In some embodiments, microcontroller 24 is a reduced instruction set computer (RISC) microcontroller. In such embodiments, microcontroller 24 may comprise one or more of: data memory, instruction memory, program counter, registers, control circuits, and input/output devices.

In some embodiments, each processing core 40 is controlled by its own microcontroller 24. In other embodiments, a single microcontroller 24 of hardware accelerator 20 controls two or more processing cores 40. For example, all of the processing cores 40 that form a processing tile of hardware accelerator 20 may be controlled by a single microcontroller 24.

Microcontroller 24 communicates with processing units 22 and a data memory 30 of hardware accelerator 20 to perform computational tasks that have been assigned to hardware accelerator 20 (e.g., tasks assigned by central processor 14 of edge computing device 12). For example, microcontroller 24 may be configured to provide a load instruction that loads data stored in memory 30 to processing unit 22. The load instruction may be performed in a clock cycle defined by a local clock 26 of hardware accelerator 20. Once the data is loaded to processing unit 22, an arithmetic instruction (e.g., addition, subtraction, multiplication, divisional) provided by microcontroller 24 in the next clock cycle can be performed on the data loaded in the processing unit 22.

Unlike traditional computer architecture (e.g., Von-Neumann based architecture) which require the output data of a processing unit to be stored in memory immediately after an arithmetic operation has been performed, the architecture of processing core 40 and processing units 22 contained therein allows a series of arithmetic operations to be performed before storing the final data is output to memory.

In the example illustrated in FIG. 3, data may be loaded from memory 30 to a first processing unit 22A of processing core 40 in a first clock cycle of local clock 26. First processing unit 22A may subsequently perform a first arithmetic operation on the loaded data in a second clock cycle of local clock 26. After performing the first arithmetic operation, the output data of processing unit 22A is transferred directly to a second processing unit 22B of processing core 40 instead of back to memory 30. Second processing unit 22A may then immediately perform a second arithmetic operation on the transferred data in the next (i.e., third) clock cycle of local clock 26, without the need to load the output data of first processing unit 22A from memory 30. This process can be repeated until a last processing unit 22C of processing core 40 performs a last arithmetic operation on the data transferred thereto and stores the final output data of processing core 40 back to memory 30. This can reduce the number of load and store operations required by processing core 40, thereby improving the computational efficiency of processing core 40 over traditional processors.

In some embodiments, memory 30 is implemented using Static Random Access Memory (SRAM) or other suitable storage technologies to facilitate concurrent load operations and store operations. That is, memory 30 may be implemented using storage technologies that enable one or more sets of data to be loaded to one or more processing units 22 in the same clock cycle as other one or more sets of data (i.e., from other one or more processing units) being stored to memory 30. For example, memory 30 may be implemented using 8T SRAM. Optionally, memory 30 may be pitch matched to the execution speed of processing units 22.

Illustratively, the architecture of hardware accelerator 20 is globally asynchronous, but locally synchronous to allow each processing core 40 to be operated independently of each other. In embodiments where each processing core 40 comprises its own local clock 26, each processing core 40 can be sped up or slowed down as needed by, for example, microcontroller 24. In other embodiments, a processing tile may comprise a single clock 26 that synchronizes the processing of the processing cores 40 contained therein. The architecture of hardware accelerator 20 avoids the need for a global clock tree which can consume large amounts of dynamic energy and a large area.

In some embodiments, different processing tiles of hardware accelerator 20 are connected to each other by way of a Network on Chip (NoC) 50. NoC 50 may be dataflow reconfigurable to enable more flexibility, while keeping the power consumption of hardware accelerator relatively low.

In some embodiments, processing units 22 are multiply units that are designed or otherwise configured to perform multiplication operations on input data. In the example illustrated in FIG. 3, each processing unit 22 may be configured to multiply a first data received through a first input with a second data received through a second input, and output the product to two or more processing units 22 (or memory 30 if the processing unit is the last processing unit 22C of the pipeline) located downstream of the pipeline of processing units 22. Illustratively, the multiplication operations can be performed on data representing numbers in MDLNS to take advantage of the tile-based architecture of hardware accelerator 20 to increase the computational efficiency associated with performing the multiplication operations. For example, hardware accelerator 20 may comprise or otherwise interface with an MDLNS converter 40 that converts data representing a number in binary (e.g., corresponding to a number stored in main memory 18 of edge computing device 12) to data representing the same number in MDLNS. MDLNS converter 40 can also convert data representing the number in MDLNS back to data representing the number in binary.

FIG. 3A is a schematic diagram of an example embodiment of processing unit 22. In the example illustrated in FIG. 3A, processing unit 22 is configured or otherwise designed to multiply a first number represented in an MDLNS x = *sₓ* * D1^{ax} * D2^{bx} by a second number represented in the same MDLNS y = *s_{y}* * D1^{ay} * D2^{by}. As illustrated in FIG. 3A, MDLNS converter 40 converts a binary data representation of numbers stored in main memory 18 of edge computing device 12 to an MDLNS data representation of the same numbers (e.g. "x", "y") . The MDLNS numbers are subsequently stored in a cache 30 of hardware accelerator 20. Processing unit 22 may be operated (e.g. through microcontroller 24) to access two or more MDLNS numbers (e.g. "x", "y") and perform a multiplication on the two or more MDLNS numbers.

In the FIG. 3A example embodiment, processing unit 22 comprises a first base adder 62 and a second base adder 64. First base adder 62 is configured to add the exponent of the first base D1 of the first number (i.e. "ax") with the exponent of the first base D1 of the second number (i.e. "ay"). Second base adder 64 is configured to add the exponent of the second base D2 of the first number (i.e. "by") with the exponent of the second base D2 of the second number (i.e. "by"). Illustratively, bases D1, D2 may be any suitable number and may be optimized in accordance to the specific application of hardware accelerator 20. Bases D1, D2 may be optimized using, for example, methods described in more detail below. Adders 62, 64 may be configured according to the optimized bases D1, D2. For example, first adder 62 may be a binary adder if D1 = 2. As another example, second adder 64 may be a ternary adder if D2 = 3.

As illustrated in FIG. 3A, first adder 62 produces the sum of the exponent of the first base D1 of the first number and the exponent of the first base D1 of the second number (i.e. "ax + ay"). Second adder 64 produces the sum of the exponent of the second base D2 of the first number and the exponent of the second base D2 of the second number (i.e. "bx + by"). As described above, the product of x and y can be represented as D1^{a1+a2}*D2^{b1+b2} in MDLNS. This allows the product of x and y to be converted back to its binary data representation by providing the output 66 of first adder 62 and the output 68 of second adder 64 to MDLNS converter 40.

In some cases, it is desirable to multiply a large set of numbers together to find an aggregate product. For example, a large number of multiplication operations may be required when performing inner product computations, matrix multiplication and/or calculations of the type that are commonly found in machine learning and AI applications. In such cases, processing unit 22 may comprise an aggregate adder 70 configured to add a large number of MDLNS numbers to find an aggregate sum thereof.

Fig. 3B is a schematic diagram illustrating an example embodiment of a processing unit 22 comprising an aggregate adder 70. In the example illustrated in FIG. 3B, accelerator cache 30 stores a large number of data representing numbers in MDLNS. For each number represented in MDLNS, the data may comprise N number of bits corresponding to the exponent of the first base D1 and M number of bits corresponding to the exponent of the second base D2. For these types of data, there will be 2^{M} possible different values of exponents of D2, each having 2^{N} possible multiplicative factors stemming from the first base D1.

Aggregate adder 70 comprises separate and dedicated aggregation channels for every 2^{N+M} different combinations of 2-tuples (N,M). In some embodiments, aggregate adder 70 comprises 2^{N+M} parallel up-counters, each configured to aggregate a unique (N,M) combination of values. Each up-counter may be a simple digital counter comprising a plurality of D-flops. The D-flops may be connected such that, for each up-counter, the clock input of the D-flop at location n (i.e. "F(n)) is connected to the output of the D-flop at location (n-1) for n=0,1,...,U, where U is the number of bits in the counter. In some embodiments, the first D-flop at n=0 is clocked by a master clock (e.g., clock 26 of processing core 40) running at a desirable clock speed "f" defined by the architecture of hardware accelerator 20.

The outputs of the up-counters are channelized partial sums which must be converted (e.g. by MDLNS converter 40) to a number system (e.g. fixed-point) that is recognized by edge computing device 12. In situations where a number P of MDLNS numbers must be aggregated, the final output of processing unit 22 is only computed after P clock cycles of clock 26. For every P cycles, the up-counter values are scaled by (D1^{M})*(D2^{N}). The up-counter values may, in some cases, be summed thereafter by a fixed-point adder of hardware accelerator 20. The fixed-point adder may, in some cases, be embodied as a part of MDLNS Converter 40.

Illustratively, the high-precision fixed-point addition and final reconstruction step (FRS) implemented by the fixed-point adder to map up-converter values to fixed-point can be performed at a reduced rate (e.g. the rate of f/P Hz). For typical machine learning structures such as convolutional neural network (CNN), P can be a number in the range 10,000 to 100,000 or more. For such applications, the FRS step may be implemented in software using, for example, a suitable embedded processor core of edge computing device 12. In some embodiments, hardware accelerator 20 comprises a series of progressive down-sampling integrators configured to convert the MDLNS up-counter values via FRS to fixed-point. The series of progressive down-sampling integrators can be operated in association with processing units 22 to determine a suitable trade-off between speed, power and chip-area of hardware accelerator 20.

In some embodiments, aggregate adder 70 comprises fixed-point adders with barrel shifters in addition to or in place of some or all of the up-counters. Such fixed-point adders may, for example, be implemented to compute the 2^{N} terms, thereby reducing number of aggregation channels from 2^{N+M} to 2^{M}.

In some embodiments, processing cores 40 and the processing units 22 contained therein are configured as systolic array matrix-vector multiply units that are connected to a single accumulator. In such embodiments, each processing unit 22 is or otherwise functions as an MDLNS multiplier unit that may be operated to compute a partial result of dot product computations and/or matrix multiplications. Illustratively, configuring the processing units 22 as a systolic array can provide an ordered dataflow and/or allow processing core 40 to exploit properties such as weight stationary and/or output stationary to increase efficiency and/or throughput of hardware accelerator 20.

In some embodiments, hardware accelerator 20 comprises a nonlinearity and reduction unit for handling activation functions and/or pooling. Activation functions are nonlinear functions in a neural network, such as a convolutional network (CNN), that define how the result of a matrix multiplication (i.e., a weighted sum) is transformed into an output. Examples of activation functions include, not are not limited to, the ReLU activation function, the leaky ReLU activation function, the Sigmoid activation function, the Softplus activation function, or any other differentiable nonlinear function. The nonlinearity and reduction unit may be designed or otherwise configured to apply a suitable activation function to the result of a matrix multiplication (e.g., "AX+ b" (matrix-matrix) "Ax +b" (matrix-vector)) performed by processing core 40.

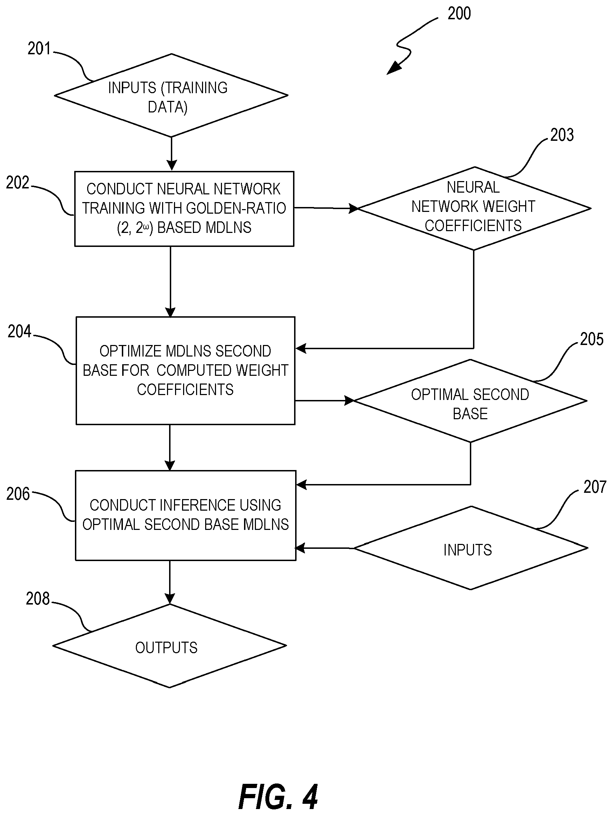

Methods that may be implemented by hardware accelerators 20 to increase the computational efficiency of deep neural network operations are described below with reference to FIG. 4.

FIG. 4 illustrates a method 200 according to one embodiment, which incorporates the foregoing concepts into the data representation used for deep neural network training and inference implementation. Method 200 is implemented using one or more hardware accelerators 20 described above to take advantage of their tile-based architecture, which may be designed or otherwise configured perform some of the computations required for deep neural network training in an effective manner.

Method 200 begins at block 202 by accepting a set of data inputs 201 (training data) and representing the set of data inputs 201 in an MDLNS comprising a first base and a second base. After representing the set of data in the MDLNS, block 202 proceeds by running training of the deep neural network on the inputs 201. As described above, a real number, *x,* can be encoded in MDLNS as: *x* = *s* * D1^{a} * D2^{b}, where (D1, D2) are two, multiplicatively independent bases and (a,b) is a set of two integers. Block 202 may comprise encoding or otherwise representing a real number, x, using any one of several different possible MDLNSs. For example, block 202 may comprise encoding or otherwise representing a real number, x, using any one of the following: 2DLNS with bases (2, 2^{ω}) where ω is the golden ratio, 3DLNS with bases (2, D2, D3) where $D 2 = 2 cos \left(\frac{2 π}{y}\right)$ and D3 = D2^2, 3DLNS with non-negative binary exponents and non-positive second-base exponents, MDLNS with non-positive binary exponents and non-negative second-base binary exponents, MDLNS with fractional exponents for the binary and non-binary bases, MDLNS with bases (2, $\sqrt{2}$, D) and integer exponents, MDLNS with bases (2, $\sqrt[4]{2}$, D) and integer exponents, MDLNS with specific optimized bases for different dynamic ranges, 3DLNS with optimized non-binary bases for different dynamic ranges, and MDLNS with optimized second bases.

Training at block 202 may be performed by inputting numbers represented in any one of the 2DLNS or MDLNS described above to hardware accelerator 20. Illustratively, golden-ratio base 2DLNS may be used in block 202 to provide an initial encoding of weight coefficients and perform dot-product calculations (i.e., using hardware accelerator 20 by taking advantage of the tile-based architecture of processing cores 40). This has the increased computational efficiencies noted above (e.g. exponentially faster conversion from logarithmic to binary format and reduced exponent size). Training at block 202 results in a determination of an initial set of weight coefficients 203 of the deep neural networks.

After determining the initial set of weight coefficients 203 of the deep neural netoworks, method 200 proceeds to block 204. At block 204, an optimization procedure is applied to determine the optimal second base 205 in 2DLNS or MDLNS using the initial set of coefficients 203. The optimization procedure at block 204 may, in some cases, involve determining the second base 205 which results in the minimal mean square error for a fixed first base (e.g., first base is 2 in particular embodiments). In one embodiment, a mixed-integer global optimization procedure is used to find the optimal bases and the values of the exponents, given the dynamic range of the exponents. The mixed-inner global optimization procedure may be implemented using mixed-integer optimization algorithms for MDLNS with integer exponents and non-binary bases that are real numbers.

Finally, method 200 proceeds to block 206. At block 206, inference is carried out on a set of inputs 207 using the newly determined optimal second-base 205 for 2DLNS. For example, weight coefficients may be represented in 2DLNS using the optimal second base. The inference calculations result in a set of outputs 208. The use of optimal second-base 2DLNS for inference computations by hardware accelerators 20 can result in increased computational efficiency (e.g. exponentially faster conversion from logarithmic to binary format and reduced exponent size), which enables inference to be carried out on edge devices (which are limited by their size or power) or other devices that require low-power, low-area and/or fast inner product computational units. Conversion from binary to logarithmic representation can be obtained via precomputed look-up tables (LUTs). For example, one LUT (containing either 256 words or 2K, respectively) can be used for 8 or 12 bit dynamic ranges.

In addition to the exemplary aspects described above, the present invention is described in the following examples, which are set forth to aid in the understanding of the invention, and should not be construed to limit in any way the scope of the invention as defined in the claims which follow thereafter.

### EXAMPLES

The following example in the field of digital hearing aids is aimed at demonstrating: a) the importance of the selection of the second base in MDLNS; and b) the importance in the number of digits, realized by an exponential reduction of the exponent size based on the use of two-digit MDLNS approximations.

Consider the 53-tap FIR filter with the following coefficients (coefficients 28-53 are a mirror of 1-26 to guarantee linear phase). The filter is used in digital hearing aids and its objective is to ensure a stop-band attenuation of over 80 dB.

**Table 2: Filter Coefficients for Digital Hearing Aid Example**

| **Filter coefficients** |
|---|
| 0.000088386028 |
| -0.000035439162 |
| -0.000305517680 |
| 0.000011540218 |
| 0.000727598360 |
| 0.000107077480 |
| -0.001490251000 |
| -0.000496150920 |
| 0.002676588800 |
| 0.001374708700 |
| -0.004370857000 |
| -0.003084987300 |
| 0.006583184400 |
| 0.006077961200 |
| -0.009253069000 |
| -0.010984374000 |
| 0.012225248000 |
| 0.018760160000 |
| -0.015625215000 |
| -0.031184863000 |
| 0.018081726000 |
| 0.052638228000 |
| -0.020271451000 |
| -0.099135649000 |
| 0.021867630000 |
| 0.315925630000 |
| 0.477612000000 |

**Table 3: Mapped Filter Coefficients for One and Two-Digit 2DLNS**

| **Coefficient Representation** | **Base x = 0.7278946656** | **One-digit 2DNLS (s,a,b)** | **Base x = 0.735254518** | **Two-digit 2DLNS (s1,a1,b1,s2,a2,b2)** |
|---|---|---|---|---|
| 0.000088386028 | 0.000088375279 | (1,102,252) | 0.000088350362 | (1,-13,1,-1,-19,1) |
| -0.000035439162 | -0.000035473564 | (-1,15,65) | -0.000035441108 | (-1,-15,-1,1,-16,3) |
| -0.000305517680 | -0.000305482052 | (-1,96,235) | -0.000305480495 | (-1,-13,-3,1,-21,-4) |
| 0.000011540218 | 0.000011534059 | (1,-114,-213) | 0.000011543360 | (1,-16,1,1,-22,-1) |
| 0.000727598360 | 0.000727637435 | (1,-37,-58) | 0.000727619244 | (1,-10,1,1,-18,-3) |
| 0.000107077480 | 0.000107016833 | (1,-92,-172) | 0.000107017877 | (1,-15,-4,1,-19,-1) |
| -0.001490251000 | -0.001489674843 | (-1,-63,-117) | -0.001491274396 | (-1,-11,-4,1,-12,1) |
| -0.000496150920 | -0.000496013930 | (-1,66,168) | -0.000495910645 | (-1,-11,0,-1,-17,0) |
| 0.002676588800 | 0.002677236086 | (1,-20,-25) | 0.002677146132 | (1,-9,-1,1,-16,-1) |
| 0.001374708700 | 0.001373339656 | (1,-37,-60) | 0.001375008824 | (1,-9,1,1,-16,-1) |
| -0.004370857000 | -0.004366611038 | (-1,-28,-44) | -0.004376987358 | ( -1.-7,2,-1,-14,-3) |
| -0.003084987300 | -0.003084196886 | (-1,-34,-56) | -0.003084960225 | (-1,-9,-2,1,-10,2) |
| 0.006583184400 | 0.006580572157 | (1,1,18) | 0.006584051535 | (1,-7,0,-1,-11,-3) |
| 0.006077961200 | 0.006080299400 | (1,38,99) | 0.006078611661 | (1,-6,3,-1,-12,2) |
| -0.009253069000 | -0.009254257357 | (-1,-26,-42) | -0.009248543981 | (-1,-7,0,-1,-9,1) |
| -0.010984374000 | -0.010986717246 | (-1,-34,-60) | -0.010984583240 | (-1,-7,-1,-1,-11,1) |
| 0.012225248000 | 0.012226517020 | (1,-76,-152) | 0.012227106720 | (1,-5,3,-1,-11,3) |
| 0.018760160000 | 0.018759469892 | (1,41,102) | 0.018753272390 | (1,-5,1,-1,-11,3) |
| -0.015625215000 | -0.015264183280 | (-1,21,59) | -0.015625989005 | (-1.-6,0,1,-10,-3) |
| -0.031184863000 | -0.031179933849 | (-1,-16,-24) | -0.031184008886 | (-1,-5,0,1,-13,2) |
| 0.018081726000 | 0.018081111094 | (1,2,17) | 0.018081896390 | (1,-6,0,1,-10,-3) |
| 0.052638228000 | 0.052644577257 | (1,4,18) | 0.052636516952 | (1-4,1,1,-9,-4) |
| -0.020371451000 | -0.020367241570 | (-1,-122,-254) | -0.020373197433 | (-1,-7,-3,-1,-10,1) |
| -0.099135649000 | -0.099138361541 | (-1,-7,-8) | -0.099132593032 | (-1,-3,1,-1,-8,-2) |
| 0.021867630000 | 0.021875010939 | (1,-55,-108) | 0.021865368722 | (1,-5,-1,1,-12,-3) |
| 0.315925630000 | 0.315924361803 | (1,13,32) | 0.315918851070 | (1,-3,-3,1,-9,1) |
| 0.477612000000 | 0.477611998152 | (1,-84,-181) | 0.477611998152 | (1,4,3,-1,3,1) |

Table 3 above reveals that MDLNS enables a massive reduction of the size of the exponent. Indeed, with ideal (infinite precision) coefficients, a stopband attenuation of - 85.362 dB is achieved. With one-digit MDLNS and 9 digits for the exponents and optimal-base of *x* = 0.7278946656, a stopband attenuation of - 80.315 dB is achieved. In the case of 2-digit MDLNS, with only three bits of the exponents used and optimal base *x* = 0.735254518, a stopband attenuation of - 81.562 dB is achieved. Thus, the combination of the optimization of the second base and the use of a two-digit representation allows one to avoid the main drawback of classical LNS, namely, the need for large LUTs to execute the difficult (for LNS) arithmetic operations. The role of accurate selection of the second base is underscored by a comparison with the use of a random (non-optimized) second base, which results in a stopband attenuation of approximately - 40 dB.

Embodiments of the invention incorporate a two-dimensional logarithmic number system (2DLNS) wherein the selection of the second base D2 is made by considering an optimal-on-average base selection. First, consider some particularly poor choices for D2 (assuming that the first base, D1 = 2). For example, suppose D2 = sqrt(2). In this case, the even powers of D2 are perfect powers of 2 and therefore we will have many numbers with very bad approximations. If we consider some other (both non-binary bases) bases, such as, for example, (19,83), then we may notice one specific phenomenon that ought to be avoided. Indeed, 19⁻³ * 83² = 1.00437.... , so this particular pair would also be considered as bad. If one considers the numbers of the form 19^{a} * 83^{b}, (wherein *a*, *b* are integers) then they will appear in clusters. Numbers 'within' a cluster will have very good approximations, whereas numbers outside the clusters will have poor approximations, unless one uses extremely large exponents (*a* and *b*)*,* which is impractical. Therefore, the theoretical restriction for the bases to be multiplicatively independent is necessary but not a sufficient condition in the selection of the bases for optimal computational performance.

Thus, a 'good' second base would be one such that log_2(D) (logarithm of D in base 2) should be a badly approximable irrational number. Since the number that is known to be the 'worst' in terms of its rational approximation is the golden ratio (ω = (1+sqrt(5))/2 = 1.618...), then a very good (universally) second base would be D = 2^{ω} = ^{21.618....} = 3.069... For convenience, we may consider base D = D/2. Indeed, this base works well and if an adaptive digital filter (for example) is implemented with 2DLNS, then using bases (2, 2^{ω} ) seems computationally optimal and can be selected if one wants a good (in the average sense) performance. This can be referred to as the optimal-on-average base selection. If the first base is not 2, then the general rule for selecting the optimal-on-average second base is: D2 = D1^{ω}.

Experiments were conducted by the inventors to find the optimal second base for the matrix-multiplication task that would be tested with MDLNS (specifically, 2DLNS in this example). For image understanding applications, the main computational operation is Wx+b, where W is a matrix (non-square) and x and b are vectors. Wx+b obeys the Gaussian distribution law located from -2 to +2.

Based on the foregoing, the interval [-2, 2] is divided into 256 equally spaced intervals and each of the 256 numbers is approximated into the form 2^a * D^b. The mean square error (MSE) with respect to D is minimized, assuming that every number in this interval has a weight provided by the Gaussian distribution. During supervised training, inputs are provided to the deep neural network, and the network output is compared to the target output. Error is measured as the difference between the target output and the network output. It is desirable to minimize the average of the sum of these errors (mean square error). For every particular exponent, and a fixed first base (which is fixed at 2, in the example embodiment) the optimal second base is derived for which the MSE is minimized. The following Table 4 illustrates the outcome:

**Table 4: Outcome of Experiments to Optimize Second-base in 2DLNS**

| **Number of bits for the non-binary exponent** | **Optimal second base** | **Mean Square Error (MSE)** |
|---|---|---|
| 3 | 1.09489 | 1.92623 |
| 4 | 1.09777 | 0.93630 |
| 5 | 1.31378 | 0.43904 |
| 6 | 0.77216 | 0.17587 |
| 7 | 0.88461 | 0.08773 |
| 8 | 0.96283 | 0.03970 |
| 9 | 1.10797 | 0.01904 |

The optimal second base has to be located in the interval [1/sqrt(2), sqrt(2)], which explains the numbers that are seen for the optimal second base in Table 4 above, calculated with 5 decimal digits precision. As seen in Table 4, the mean square error decreases as a function of the number of bits for the non-binary exponents.

Table 5 below shows a numerically obtained data comparison between (a) specifically optimized second-bases (different for every bit-size given) with a first base of 2; (b) bases (2,3) 2DLNS; and (c) optimal-on-average bases (2, 2^{ω}) 2DLNS about the mean square error of the input data approximations. The data are assumed to obey Gaussian distribution located between [-2, 2].

**Table 5: Comparisons between specifically optimized second-bases, bases (2,3) 2DLNS and bases (2, 2^{ω}) 2DLNS**

| **Number of bits for the exponents of the non-binary base** | **Mean square error (MSE) for specifically optimized second-base (different for every single size of the exponents)** | **Mean square error (MSE) for the 2DLNS with bases** (2, 3) | **Mean square error (MSE) for the 2DLNS with bases** (2, 2^{ω}) |
|---|---|---|---|
| 5 | 0.43904 | 0.52738 | 0.51650 |
| 6 | 0.17587 | 0.22849 | 0.25286 |
| 7 | 0.08773 | 0.14872 | 0.12416 |
| 8 | 0.03970 | 0.06164 | 0.05924 |
| 9 | 0.01904 | 0.03113 | 0.02557 |

Several important conclusions can be observed from the above Table 5. If one uses a specifically optimized second-base, the mean square error is improved by a factor of more than two every step of the way, as we add an additional bit to the exponents; with the selection of the optimal-on-average bases (2, 2^{ω}), one obtains a very robust reduction of the error, by a factor slightly larger than 2; and this selection of bases is almost always better in comparison to the bases (2, 3) 2DLNS, with one exception (6-bits exponents).

In digital signal processing, there is a fundamental difference between the use of MDLNS in FIR/IIR filtering and adaptive filtering. The foregoing discussion underscores the importance of carefully selecting the second base to secure a highly efficient MDLNS inner product architecture, including very small exponents, very small LUTs and very small adders. On the other hand, if one selects the second base randomly, then the performance of the FIR/IIR architecture will be substantially sub-optimal.

In the case of adaptive filtering, selection of an optimal second base is not an option, since the coefficients of the filter changes iteratively, depending on the adaptive filtering algorithm. Thus, one can use the optimal-on-average technique for selection of the second base, as discussed above.

The foregoing concepts can also be applied to inner product computations with data representation using three-dimensional logarithmic number systems (3DLNS). For optimal-on-average bases selection, we have to look for a 'badly approximable pair of real numbers'. While there have been less investigations in this area, some explicit estimations for a pair of irrational numbers that cannot be approximated as well as rational numbers are discussed in T.W. Cusick, The two-dimensional Diophantine approximation constant - II, Pacific Journal of Mathematics, vol. 105, pp. 53-67, 1983. Cusick's results have been extended by Keith Briggs in Some explicitly badly approximable pairs <arxiv.org/pdf/math/0211143.pdf>, October 25, 2018, and the pair that he has found to be particularly difficult to approximate as a pair of rational numbers is: (α, α²), where α = cos(2*pi/7) is known to be a very good candidate. Therefore, the triple of bases (2, 2^{α}, 2^{α^2}) = (2, 1.18671, 1.469117) is a good practical choice for an optimal-on-average bases selection in the case of 3DLNS applications.

The numbers in the table below were obtained using mixed-integer optimization techniques (wherein the exponents are integers and the non-binary bases are real numbers).

| **Table with 3DLNS - bases (2,3,2.5):** | | | | |
|---|---|---|---|---|
| 0.03125 | -5 | 0 | 0 | 0. |
| 0.046875 | -6 | 1 | 0 | 0. |
| 0.0625 | -4 | 0 | 0 | 0. |
| 0.078125 | -5 | 0 | 1 | 0. |
| 0.09375 | -5 | 1 | 0 | 0. |
| 0.109375 | -9 | 2 | 2 | 0.00048828125 |
| 0.125 | -3 | 0 | 0 | 0. |
| 0.140625 | -6 | 2 | 0 | 0. |
| 0.15625 | -4 | 0 | 1 | 0. |
| 0.171875 | -2 | 3 | -4 | 0.0009250000000000091 |
| 0.1875 | -4 | 1 | 0 | 0. |
| 0.203125 | 8 | -4 | -3 | 0.000853395061728407 |
| 0.21875 | -8 | 2 | 2 | 0.0009765625 |
| 0.234375 | -5 | 1 | 1 | 0. |
| 0.25 | -2 | 0 | 0 | 0. |
| 0.265625 | 1 | -1 | -1 | 0.001041666666666663 |
| 0.28125 | -5 | 2 | 0 | 0. |
| 0.296875 | 3 | -3 | 0 | 0.0005787037037037202 |
| 0.3125 | -3 | 0 | 1 | 0. |
| 0.328125 | -9 | 3 | 2 | 0.00146484375 |
| 0.34375 | -1 | 3 | -4 | 0.0018500000000000183 |
| 0.359375 | -2 | 2 | -2 | 0.0006249999999999867 |
| 0.375 | -3 | 1 | 0 | 0. |
| 0.390625 | -4 | 0 | 2 | 0. |
| 0.40625 | 9 | -4 | -3 | 0.001706790123456814 |
| 0.421875 | -6 | 3 | 0 | 0. |
| 0.4375 | -7 | 2 | 2 | 0.001953125 |
| 0.453125 | 6 | -2 | -3 | 0.0019861111111110774 |
| 0.46875 | -4 | 1 | 1 | 0. |
| 0.484375 | 9 | -3 | -4 | 0.0010768518518518566 |
| 0.5 | -1 | 0 | 0 | 0. |
| 0.515625 | 3 | 0 | -3 | 0.0036249999999999893 |
| 0.53125 | 2 | -1 | -1 | 0.002083333333333326 |
| 0.546875 | 6 | -1 | -4 | 0.0007416666666666405 |
| 0.5625 | -4 | 2 | 0 | 0. |
| 0.578125 | 0 | -3 | 3 | 0.0005787037037037202 |
| 0.59375 | 4 | -3 | 0 | 0.0011574074074074403 |
| 0.609375 | 8 | -3 | -3 | 0.002560185185185193 |
| 0.625 | -2 | 0 | 1 | 0. |
| 0.640625 | 2 | 0 | -2 | 0.0006249999999999867 |
| 0.65625 | -8 | 3 | 2 | 0.0029296875 |
| 0.671875 | -4 | 3 | -1 | 0.0031250000000000444 |
| 0.6875 | 0 | 3 | -4 | 0.0037000000000000366 |
| 0.703125 | -5 | 2 | 1 | 0. |
| 0.71875 | -1 | 2 | -2 | 0.0012499999999999734 |
| 0.734375 | -6 | 1 | 3 | 0.001953125 |
| 0.75 | -2 | 1 | 0 | 0. |
| 0.765625 | 2 | 1 | -3 | 0.002375000000000016 |
| 0.78125 | -3 | 0 | 2 | 0. |
| 0.796875 | 1 | 0 | -1 | 0.0031250000000000444 |
| 0.8125 | 10 | -4 | -3 | 0.003413580246913628 |
| 0.828125 | -9 | 3 | 3 | 0.004150390625 |
| 0.84375 | -5 | 3 | 0 | 0. |
| 0.859375 | -1 | 3 | -3 | 0.00462499999999999 |
| 0.875 | -6 | 2 | 2 | 0.00390625 |
| 0.890625 | 3 | -2 | 0 | 0.0017361111111111605 |
| 0.90625 | 7 | -2 | -3 | 0.003972222222222155 |
| 0.921875 | 2 | 2 | -4 | 0.0002749999999999142 |
| 0.9375 | -3 | 1 | 1 | 0. |
| 0.953125 | 6 | -3 | -1 | 0.004976851851851816 |
| 0.96875 | 10 | -3 | -4 | 0.0021537037037037132 |
| 0.984375 | 5 | -4 | 1 | 0.003279320987654266 |
| 1. | 0 | 0 | 0 | 0. |
| 1.015625 | 9 | -4 | -2 | 0.0042669753086419515 |
| 1.03125 | 4 | 0 | -3 | 0.007249999999999979 |
| 1.046875 | -6 | 3 | 1 | 0.0078125 |
| 1.0625 | 3 | -1 | -1 | 0.004166666666666652 |
| 1.078125 | -2 | 3 | -2 | 0.001875000000000071 |
| 1.09375 | 7 | -1 | -4 | 0.001483333333333281 |
| 1.109375 | 2 | -2 | 1 | 0.0017361111111111605 |
| 1.125 | -3 | 2 | 0 | 0. |
| 1.140625 | 6 | -2 | -2 | 0.002847222222222273 |
| 1.15625 | 1 | -3 | 3 | 0.0011574074074074403 |
| 1.171875 | -4 | 1 | 2 | 0. |
| 1.1875 | 5 | -3 | 0 | 0.0023148148148148806 |
| 1.203125 | 0 | 1 | -1 | 0.0031249999999998224 |
| 1.21875 | 9 | -3 | -3 | 0.005120370370370386 |
| 1.234375 | 4 | -4 | 2 | 0.0001929012345678327 |
| 1.25 | -1 | 0 | 1 | 0. |
| 1.265625 | 8 | -4 | -1 | 0.001427469135802495 |
| 1.28125 | 3 | 0 | -2 | 0.0012499999999999734 |
| 1.296875 | 12 | -4 | -4 | 0.0023367283950617157 |
| 1.3125 | -7 | 3 | 2 | 0.005859375 |
| 1.328125 | 2 | -1 | 0 | 0.005208333333333259 |
| 1.34375 | -3 | 3 | -1 | 0.006250000000000089 |
| 1.359375 | 6 | -1 | -3 | 0.005958333333333288 |
| 1.375 | 1 | 3 | -4 | 0.007400000000000073 |
| 1.390625 | 1 | -2 | 2 | 0.0017361111111111605 |
| 1.40625 | -4 | 2 | 1 | 0. |
| 1.421875 | 5 | -2 | -1 | 0.00034722222222222765 |
| 1.4375 | 0 | 2 | -2 | 0.0024999999999999467 |
| 1.453125 | 9 | -2 | -4 | 0.0032305555555556253 |
| 1.46875 | -5 | 1 | 3 | 0.00390625 |
| 1.484375 | 4 | -3 | 1 | 0.0028935185185186008 |
| 1.5 | -1 | 1 | 0 | 0. |
| 1.515625 | 8 | -3 | -2 | 0.0014120370370369617 |
| 1.53125 | 3 | 1 | -3 | 0.004750000000000032 |
| 1.546875 | 3 | -4 | 3 | 0.0036651234567901536 |
| 1.5625 | -2 | 0 | 2 | 0. |
| 1.578125 | 7 | -4 | 0 | 0.002121913580246826 |
| 1.59375 | 2 | 0 | -1 | 0.006250000000000089 |
| 1.609375 | 11 | -4 | -3 | 0.008797839506172744 |
| 1.625 | 11 | -4 | -3 | 0.006827160493827256 |
| 1.640625 | 6 | 0 | -4 | 0.0022249999999999215 |
| 1.65625 | -8 | 3 | 3 | 0.00830078125 |
| 1.671875 | 1 | -1 | 1 | 0.005208333333333481 |
| 1.6875 | -4 | 3 | 0 | 0. |
| 1.703125 | 5 | -1 | -2 | 0.003541666666666554 |
| 1.71875 | 0 | 3 | -3 | 0.00924999999999998 |
| 1.734375 | 0 | -2 | 3 | 0.0017361111111109384 |
| 1.75 | -5 | 2 | 2 | 0.0078125 |
| 1.765625 | -5 | 2 | 2 | 0.0078125 |
| 1.78125 | 4 | -2 | 0 | 0.003472222222222321 |
| 1.796875 | -1 | 2 | -1 | 0.003125000000000044 |
| 1.8125 | 8 | -2 | -3 | 0.007914444444444431 |
| 1.828125 | 8 | -2 | -3 | 0.00768055555555569 |
| 1.84375 | 3 | 2 | -4 | 0.0005499999999998284 |
| 1.859375 | 3 | -3 | 2 | 0.007523148148148362 |
| 1.875 | -2 | 1 | 1 | 0. |
| 1.890625 | 7 | -3 | -1 | 0.005671296296296369 |
| 1.90625 | 7 | -3 | -1 | 0.009953703703703631 |
| 1.921875 | 2 | 1 | -2 | 0.001875000000000071 |
| 1.9375 | 11 | -3 | -4 | 0.0043074074074074264 |
| 1.953125 | -3 | 0 | 3 | 0. |
| 1.96875 | 6 | -4 | 1 | 0.006558641975308532 |
| 1.984375 | 6 | -4 | 1 | 0.009066358024691468 |

The examples and corresponding diagrams used herein are for illustrative purposes only.

Although the invention has been described with reference to certain specific embodiments, various modifications thereof will be apparent to those skilled in the art without departing from the scope of the invention, which is defined by the claims. The scope of the claims should not be limited by the illustrative embodiments set forth in the examples, but should be given the broadest interpretation consistent with the description as a whole.

## Claims

1. A method for implementing training of deep neural networks, the method implemented by a hardware accelerator (20) connected to a memory (18) of a computing device (12) and comprising:
(a) receiving a set of training data from the memory (18);
(b) representing the set of training data in a multidimensional logarithmic number system, MDLNS, the MDLNS representation using a first exponent associated with a first base and a second exponent associated with a second base;
(c) conducting deep neural network training on the set of training data, using a predetermined first base and a predetermined second base, to determine a set of neural network weight coefficients, wherein the deep neural network training is conducted by one or more processing cores (40) of the hardware accelerator (20), the one or more processing cores (40) each comprising a plurality of processing units (22) arranged in an array of a first number of rows and a second number of columns ; and
(d) based on the determined set of neural network weight coefficients and for the predetermined first base, optimizing the second base for multi-dimensional logarithmic data representation;
wherein the optimized multi-dimensional logarithmic data representation is useable in the trained deep neural network to conduct deep neural network inference on a set of neural network inputs to obtain a set of neural network outputs.

2. The method according to claim 1, wherein optimizing the second base for multi-dimensional logarithmic data representation comprises determining an optimal second base for which the mean square error, MSE, is minimized, wherein the method preferably comprises implementing a mixed-integer global optimization procedure to optimize the second base and a range of the second exponents associated therewith.

3. The method according to any one of claims 1 to 2, wherein the predetermined first base is 2 and the predetermined second base is 2^{ω}, wherein ω = (1+sqrt(5))/2.

4. The method according to claim 1, wherein the MDLNS uses one or more additional exponents, each of the one or more additional exponents associated with a corresponding one or more additional bases, the method further comprising optimizing at least one of the one or more additional bases for the multi-dimensional logarithmic data representation.

5. The method according to claim 4, wherein conducting deep neural network training on the set of training data comprises using a predetermined third base, wherein the predetermined second base is $2 cos \left(\frac{2 π}{y}\right)$, and wherein the predetermined third base is ${\left[2cos\left(\frac{2 π}{y}\right)\right]}^{2}$.

6. The method according to claim 4, wherein the exponents are integer values, and wherein the predetermined second base is selected from the group consisting of: $\sqrt{2} , \sqrt[3]{2}$*, and* $\sqrt[4]{2}$*.*

7. The method according to claim 4, wherein the first exponent and the second exponent are opposite in polarity and/or fractional values.

8. A hardware accelerator (20) configured to perform inner product computations assigned thereto from a processor (14) of a computing device (12), the hardware accelerator (20) comprising:
a multidimensional logarithmic number system, MDLNS, converter connected to a memory (18) of the computing device (12) and a cache (30) of the hardware accelerator (20);
a plurality of processing units (22) arranged in an array of a first number of rows and a second number of columns, the plurality of processing units (22) collectively forming a processing core (40); and
a microcontroller (24) connected to the processing core (40) and the MDLNS converter,
wherein the MDLNS converter is configured to create an MDLNS representation of a set of data received from the memory (18) of the computing device (12) and to store the MDLNS representation in the cache (30) of the hardware accelerator (20), the MDLNS representation using a first exponent associated with a binary base and a second exponent associated with a non-binary base; and
wherein the hardware accelerator (20) is configured to conduct a deep neural network training on the set of data in the MDLNS representation using a predetermined first base and a predetermined second base to determine a set of neural network weight coefficients, and based on the determined set of neural network weight coefficients and for the predetermined first base, the hardware accelerator (20) is configured to optimize the non-binary base for multi-dimensional logarithmic data representation wherein the optimized multi-dimensional logarithmic data representation is used to conduct deep neural network inference on the hardware accelerator (20) on a set of neural network inputs to obtain a set of neural network outputs.

9. The hardware accelerator (20) according to claim 8, wherein the processing unit (22) comprises a first adder (62) operating in the binary base and a second adder (64) operating in the non-binary base.

10. The hardware accelerator (20) according to claim 9, wherein the processing unit (22) comprises an aggregate adder (70) connected to the first adder (62) and the second adder (64), the aggregate adder (70) having a plurality of aggregation channels, each aggregation channel corresponding to a unique combination of pairs (N,M) defined by an N number of bits of the first exponent and an M number of bits of the second exponent.

11. The hardware accelerator (20) according to claim 10, wherein the aggregate adder (70) comprises 2^{N+M} up-counters operating in parallel for aggregating a unique (N, M) combination of exponents.

12. The hardware accelerator (20) according to any one of claims 8 to 11, wherein the processing units (22) of the processing core (40) are configured as a systolic array of matrix-vector multiply units.

13. The hardware accelerator (20) according to any one of claims 8 to 12, wherein the second base is 2^{ω}, and wherein ω = (1+sqrt(5))/2.

14. The hardware accelerator (20) according to any one of claims 8 to 13, comprising a plurality of processing tiles, each processing tile comprising a plurality of the processing core (40) and connected to other processing tiles by way of a network on chip (50).

15. The hardware accelerator (20) according to any one of claims 8 to 14, wherein the computing device (12) is an edge computing device.

## Patentansprüche

1. Verfahren zum Durchführen des Trainings tiefer neuronaler Netzwerke, wobei das Verfahren von einem Hardwarebeschleuniger (20) ausgeführt wird, der mit einem Speicher (18) einer Rechenvorrichtung (12) verbunden ist und umfassend:
(a) Empfangen eines Satzes von Trainingsdaten aus dem Speicher (18);
(b) Darstellen des Satzes von Trainingsdaten in einem mehrdimensionalen logarithmischen Zahlensystem (MDLNS), wobei die MDLNS-Darstellung einen ersten Exponenten, der einer ersten Basis zugeordnet ist, und einen zweiten Exponenten, der einer zweiten Basis zugeordnet ist, verwendet;
(c) Durchführen eines Trainings des tiefen neuronalen Netzwerks anhand des Trainingsdatensatzes unter Verwendung einer vorbestimmten ersten Basis und einer vorbestimmten zweiten Basis, um einen Satz von Gewichtungskoeffizienten des neuronalen Netzwerks zu bestimmen, wobei das Training des tiefen neuronalen Netzwerks von einem oder mehreren Rechenkernen (40) des Hardwarebeschleunigers (20) durchgeführt wird, wobei der eine oder die mehreren Rechenkern(e) (40) jeweils eine Vielzahl von Recheneinheiten (22) umfassen, die in einem Array mit einer ersten Anzahl von Zeilen und einer zweiten Anzahl von Spalten angeordnet sind; und
(d) basierend auf dem bestimmten Satz von Gewichtungskoeffizienten des neuronalen Netzes und für die vorgegebene erste Basis, Optimieren der zweiten Basis für die mehrdimensionale logarithmische Datendarstellung;
wobei die optimierte mehrdimensionale logarithmische Datendarstellung in dem trainierten tiefen neuronalen Netzwerk verwendet werden kann, um eine Inferenz des tiefen neuronalen Netzwerks anhand eines Satzes von neuronalen Netzwerkeingaben durchzuführen und so einen Satz von neuronalen Netzwerkausgaben zu erhalten.

2. Verfahren nach Anspruch 1, wobei das Optimieren der zweiten Basis für die mehrdimensionale logarithmische Datendarstellung das Bestimmen einer optimalen zweiten Basis umfasst, für die der mittlere quadratische Fehler (MSE) minimiert wird, wobei das Verfahren vorzugsweise das Implementieren eines globalen Optimierungsverfahrens mit gemischten ganzzahligen Variablen umfasst, um die zweite Basis und einen Bereich der damit verbundenen zweiten Exponenten zu optimieren.

3. Verfahren nach einem der Ansprüche 1 bis 2, wobei die vorgegebene erste Basis 2 und die vorgegebene zweite Basis 2^{ω} beträgt, wobei ω = (1 + √5)/2 gilt.

4. Verfahren nach Anspruch 1, wobei die MDLNS einen oder mehrere zusätzliche Exponenten verwendet, wobei jeder der einen oder mehreren zusätzlichen Exponenten einer entsprechenden einer oder mehreren zusätzlichen Basen zugeordnet ist, wobei das Verfahren ferner das Optimieren mindestens einer der einen oder mehreren zusätzlichen Basen für die mehrdimensionale logarithmische Datendarstellung umfasst.

5. Verfahren nach Anspruch 4, wobei das Trainieren eines tiefen neuronalen Netzwerkes anhand des Trainingsdatensatzes die Verwendung einer vorbestimmten dritten Basis umfasst, wobei die vorbestimmte zweite Basis $2 cos \left(\frac{2 π}{γ}\right)$ ist und die vorbestimmte dritte Basis ${\left[2cos\left(\frac{2 π}{γ}\right)\right]}^{2}$ ist.

6. Verfahren nach Anspruch 4, wobei die Exponenten ganzzahlige Werte sind und wobei die vorbestimmte zweite Basis aus der Gruppe ausgewählt wird, bestehend aus: $\sqrt{2} , \sqrt[3]{2}$, und $\sqrt[4]{2}$.

7. Verfahren nach Anspruch 4, wobei der erste Exponent und der zweite Exponent hinsichtlich ihrer Polarität und/oder ihrer Bruchwerte entgegengesetzt sind.

8. Hardwarebeschleuniger (20), der konfiguriert ist, um ihm von einem Prozessor (14) einer Rechenvorrichtung (12) zugewiesene Skalarproduktberechnungen durchzuführen, der Hardwarebeschleuniger (20) umfassend:
einen Konverter für ein mehrdimensionales logarithmisches Zahlensystem, MDLNS, der mit einem Speicher (18) der Rechenvorrichtung (12) und einem Cache (30) des Hardwarebeschleunigers (20) verbunden ist;
eine Vielzahl von Verarbeitungseinheiten (22), die in einem Array mit einer ersten Anzahl von Zeilen und einer zweiten Anzahl von Spalten angeordnet sind, wobei die Vielzahl von Verarbeitungseinheiten (22) gemeinsam einen Verarbeitungskern (40) bildet; und
einen Mikrocontroller (24), der eine Verbindung mit dem Verarbeitungskern (40) und dem MDLNS-Konverter aufweist, wobei der MDLNS-Konverter konfiguriert ist, um eine MDLNS-Darstellung eines aus dem Speicher (18) der Rechenvorrichtung (12) empfangenen Datensatzes zu erzeugen und die MDLNS-Darstellung im Cache (30) des Hardwarebeschleunigers (20) zu speichern, wobei die MDLNS-Darstellung einen ersten Exponenten, der einer binären Basis zugeordnet ist, und einen zweiten Exponenten, der einer nicht-binären Basis zugeordnet ist, verwendet; und
wobei der Hardwarebeschleuniger (20) konfiguriert ist, um ein Training eines tiefen neuronalenNetzwerks für den Satz von Daten in der MDLNS-Darstellung unter Verwendung einer vorbestimmten ersten Basis und einer vorbestimmten zweiten Basis durchzuführen, um einen Satz von Gewichtungskoeffizienten des neuronalen Netzwerks zu bestimmen, und basierend auf dem bestimmten Satz von Gewichtungskoeffizienten des neuronalen Netzwerks und für die vorbestimmte erste Basis, der Hardwarebeschleuniger (20) konfiguriert ist, um die nicht-binäre Basis für eine mehrdimensionale logarithmische Datendarstellung zu optimieren, wobei die optimierte mehrdimensionale logarithmische Datendarstellung verwendet wird, um auf dem Hardwarebeschleuniger (20) eine Inferenz in einem tiefen neuronalen Netzwerk anhand eines Satzes von neuronalen Netzwerkeingaben durchzuführen, um einen Satz von neuronalen Netzwerkausgaben zu erhalten.

9. Hardwarebeschleuniger (20) nach Anspruch 8, wobei die Verarbeitungseinheit (22) einen ersten Addierer (62), der auf der binären Basis arbeitet, und einen zweiten Addierer (64), der auf der nicht-binären Basis arbeitet, umfasst.

10. Hardwarebeschleuniger (20) nach Anspruch 9, wobei die Verarbeitungseinheit (22) einen Aggregationsaddierer (70) umfasst, der mit dem ersten Addierer (62) und dem zweiten Addierer (64) verbunden ist, der Aggregationsaddierer (70) eine Vielzahl von Aggregationskanälen aufweist, wobei jeder Aggregationskanal einer eindeutigen Kombination von Paaren (N, M) entspricht, die durch eine Anzahl von N Bits des ersten Exponenten und eine Anzahl von M Bits des zweiten Exponenten definiert sind.

11. Hardwarebeschleuniger (20) nach Anspruch 10, wobei der Aggregataddierer (70) 2^{N+M} parallel arbeitende Aufwärtszähler umfasst, die zur Aggregation einer eindeutigen (N, M)-Kombination von Exponenten dienen.

12. Hardwarebeschleuniger (20) nach einem der Ansprüche 8 bis 11, wobei die Verarbeitungseinheiten (22) des Verarbeitungskerns (40) als systolisches Array aus Matrixvektoreinheiten ausgebildet sind.

13. Hardwarebeschleuniger (20) nach einem der Ansprüche 8 bis 12, wobei die zweite Basis 2^{ω} ist und wobei ω = (1 + √5)/2 gilt.

14. Hardwarebeschleuniger (20) nach einem der Ansprüche 8 bis 13, umfassend eine Vielzahl von Verarbeitungsbausteinen, wobei jeder Verarbeitungsbaustein eine Vielzahl von Verarbeitungskernen (40) umfasst und über ein On-Chip-Netzwerk (50) mit anderen Verarbeitungsbausteinen verbunden ist.

15. Hardwarebeschleuniger (20) nach einem der Ansprüche 8 bis 14, wobei es sich bei der Rechenvorrichtung (12) um eine Edge-Rechenvorrichtung handelt.

## Revendications

1. Procédé permettant d'implémenter l'entraînement de réseaux neuronaux profonds, le procédé étant implémenté par un accélérateur matériel (20) connecté à une mémoire (18) d'un dispositif informatique (12) et comprenant :
(a) la réception d'un ensemble de données d'entraînement provenant de la mémoire (18) ;
(b) la représentation de l'ensemble de données d'entraînement dans un système de numération logarithmique multidimensionnel, MDLNS, la représentation MDLNS utilisant un premier exposant associé à une première base et un second exposant associé à une deuxième base ;
(c) la réalisation d'un entraînement de réseau neuronal profond sur l'ensemble de données d'entraînement, à l'aide d'une première base prédéterminée et d'une deuxième base prédéterminée, pour déterminer un ensemble de coefficients de pondération de réseau neuronal, dans lequel l'entraînement de réseau neuronal profond est réalisé par un ou plusieurs cœurs de traitement (40) de l'accélérateur matériel (20), le ou les cœurs de traitement (40) comprenant chacun une pluralité d'unités de traitement (22) agencées dans un réseau d'un premier nombre de lignes et d'un second nombre de colonnes ; et
(d) sur la base de l'ensemble déterminé de coefficients de pondération de réseau neuronal et pour la première base prédéterminée, l'optimisation de la deuxième base pour une représentation de données logarithmiques multidimensionnelles ;
dans lequel la représentation de données logarithmiques multidimensionnelles optimisée peut être utilisée dans le réseau neuronal profond entraîné pour réaliser une inférence de réseau neuronal profond sur un ensemble d'entrées de réseau neuronal afin d'obtenir un ensemble de sorties de réseau neuronal.

2. Procédé selon la revendication 1, dans lequel l'optimisation de la deuxième base pour la représentation de données logarithmiques multidimensionnelles comprend la détermination d'une deuxième base optimale pour laquelle l'erreur quadratique moyenne, MSE, est minimisée, dans lequel le procédé comprend de préférence l'implémentation d'une procédure d'optimisation globale en nombres entiers mixtes pour optimiser la deuxième base et une plage des seconds exposants associés à celle-ci.

3. Procédé selon l'une quelconque des revendications 1 à 2, dans lequel la première base prédéterminée est 2 et la deuxième base prédéterminée est 2^{ω}, où ω = (1+√5)/2.

4. Procédé selon la revendication 1, dans lequel le MDLNS utilise un ou plusieurs exposants supplémentaires, chacun parmi le ou les exposants supplémentaires étant associé à une ou plusieurs bases supplémentaires correspondantes, le procédé comprenant en outre l'optimisation d'au moins l'une parmi la ou les bases supplémentaires pour la représentation de données logarithmiques multidimensionnelles.

5. Procédé selon la revendication 4, dans lequel la réalisation d'un entraînement de réseau neuronal profond sur l'ensemble de données d'entraînement comprend l'utilisation d'une troisième base prédéterminée, dans lequel la deuxième base prédéterminée est $2 cos \left(\frac{2 π}{γ}\right)$, et dans lequel la troisième base prédéterminée est ${\left[2cos\left(\frac{2 π}{γ}\right)\right]}^{2}$.

6. Procédé selon la revendication 4, dans lequel les exposants sont des valeurs entières, et dans lequel la deuxième base prédéterminée est sélectionnée parmi le groupe constitué de : $\sqrt{2} , \sqrt[3]{2}$, et $\sqrt[4]{2}$.

7. Procédé selon la revendication 4, dans lequel le premier exposant et le second exposant sont de polarité opposée et/ou de valeurs fractionnaires opposées.

8. Accélérateur matériel (20) configuré pour effectuer des calculs de produits scalaires qui sont affectés à celui-ci à partir d'un processeur (14) d'un dispositif informatique (12), l'accélérateur matériel (20) comprenant :
un convertisseur de système de numération logarithmique multidimensionnel, MDLNS, connecté à une mémoire (18) du dispositif informatique (12) et à une mémoire cache (30) de l'accélérateur matériel (20) ;
une pluralité d'unités de traitement (22) agencées dans un réseau d'un premier nombre de lignes et d'un second nombre de colonnes, la pluralité d'unités de traitement (22) formant collectivement un cœur de traitement (40) ; et
un microcontrôleur (24) connecté au cœur de traitement (40) et au convertisseur MDLNS,
dans lequel le convertisseur MDLNS est configuré pour créer une représentation MDLNS d'un ensemble de données reçues de la mémoire (18) du dispositif informatique (12) et pour stocker la représentation MDLNS dans la mémoire cache (30) de l'accélérateur matériel (20), la représentation MDLNS utilisant un premier exposant associé à une base binaire et un second exposant associé à une base non binaire ; et
dans lequel l'accélérateur matériel (20) est configuré pour réaliser un entraînement de réseau neuronal profond sur l'ensemble de données dans la représentation MDLNS à l'aide d'une première base prédéterminée et d'une deuxième base prédéterminée pour déterminer un ensemble de coefficients de pondération de réseau neuronal, et sur la base de l'ensemble déterminé de coefficients de pondération de réseau neuronal et pour la première base prédéterminée, l'accélérateur matériel (20) est configuré pour optimiser la base non binaire pour la représentation de données logarithmiques multidimensionnelles, dans lequel la représentation de données logarithmiques multidimensionnelles optimisée est utilisée pour réaliser une inférence de réseau neuronal profond sur l'accélérateur matériel (20) sur un ensemble d'entrées de réseau neuronal afin d'obtenir un ensemble de sorties de réseau neuronal.

9. Accélérateur matériel (20) selon la revendication 8, dans lequel l'unité de traitement (22) comprend un premier additionneur (62) fonctionnant en base binaire et un second additionneur (64) fonctionnant en base non binaire.

10. Accélérateur matériel (20) selon la revendication 9, dans lequel l'unité de traitement (22) comprend un additionneur d'agrégation (70) connecté au premier additionneur (62) et au second additionneur (64), l'additionneur d'agrégation (70) ayant une pluralité de canaux d'agrégation, chaque canal d'agrégation correspondant à une combinaison unique de paires (N, M) définies par un nombre N de bits du premier exposant et un nombre M de bits du second exposant.

11. Accélérateur matériel (20) selon la revendication 10, dans lequel l'additionneur d'agrégation (70) comprend 2^{N+M} compteurs incrémentaux fonctionnant en parallèle pour agréger une combinaison (N, M) unique d'exposants.

12. Accélérateur matériel (20) selon l'une quelconque des revendications 8 à 11, dans lequel les unités de traitement (22) du cœur de traitement (40) sont configurées sous la forme d'un réseau systolique d'unités de multiplication matrice-vecteur.

13. Accélérateur matériel (20) selon l'une quelconque des revendications 8 à 12, dans lequel la deuxième base est 2^{ω}, et où ω = (1+√5)/2.

14. Accélérateur matériel (20) selon l'une quelconque des revendications 8 à 13, comprenant une pluralité de tuiles de traitement, chaque tuile de traitement comprenant une pluralité de cœurs de traitement (40) et étant connectée à d'autres tuiles de traitement au moyen d'un réseau sur puce (50).

15. Accélérateur matériel (20) selon l'une quelconque des revendications 8 à 14, dans lequel le dispositif informatique (12) est un dispositif informatique en périphérie.
